# FASCICULE DE BREVET EUROPEEN

(11) **EP 2 956 038 B1**
(45) Date de publication et mention de la délivrance du brevet: **06.06.2018**
(21) Numéro de dépôt: 14706913.2
(22) Date de dépôt: 11.02.2014
(51) Int. Cl.: A47J 37/06, A47J 37/10, A47J 36/16, A47J 43/07

(54) **APPAREIL DE CUISSON PAR FLUX D'AIR**
VORRICHTUNG ZUM KOCHEN MITTELS LUFTSTROM
APPLIANCE FOR COOKING BY AIR FLOW

(30) Priorité: 15.02.2013 FR 1351291
(43) Date de publication de la demande: 23.12.2015
(73) Titulaire: SEB S.A., 69130 Ecully (FR)
(72) Inventeur: LE GRAND, Olivier, 21380 Messigny Et Vantoux (FR)
(74) Mandataire: Cémeli, Eric Philippe Laurent
(86) Numéro de dépôt international: PCT/FR2014/050254
(87) Numéro de publication internationale: WO 2014/125200

(56) Documents cités:
- WO-A2-2012/007681

## Description

La présente invention concerne de manière générale un appareil de cuisson par ventilation.

Il est connu dans l'art antérieur des appareils de cuisson par flux d'air, et comprenant généralement une gaine de ventilation agencée pour conduire le flux d'air depuis un ventilateur jusqu'aux aliments à cuire. Le document WO2012007681 décrit un appareil de cuisson par flux d'air de ce type. En contrepartie, ces appareils présentent notamment l'inconvénient d'être bruyants et nécessitent un temps de cuisson important.

Un but de la présente invention est de répondre aux inconvénients de l'art antérieur mentionnés ci-dessus et en particulier, tout d'abord, de proposer un appareil de cuisson par flux d'air dont le fonctionnement est silencieux, et proposant une cuisson rapide des aliments.

Pour cela un premier aspect de l'invention concerne un appareil de cuisson et/ou de réchauffage d'aliments comprenant :
- un boîtier avec une cuve de cuisson agencée pour recevoir les aliments à cuire et/ou à réchauffer,
- un circuit de chauffage par ventilation comprenant une gaine de ventilation agencée pour canaliser et diriger un flux d'air chaud sur les aliments à cuire et/ou à réchauffer,
caractérisé en ce que la gaine de ventilation présente au moins une section transversale en aval de laquelle les turbulences de l'écoulement d'air sont réduites par une limitation d'une dimension géométrique du flux d'air canalisé par ladite section transversale de la gaine de ventilation.

L'appareil selon la présente mise en oeuvre offre un bon silence de fonctionnement car la gaine de ventilation est agencée pour réduire les turbulences dans la gaine de ventilation. En d'autres termes, la gaine de ventilation est agencée pour obtenir un écoulement laminaire. Il n'y a donc pas de remous d'air bruyants dans la gaine de ventilation, et l'efficacité de chauffage est augmentée, car la réduction de turbulence réduit également les pertes d'énergie dans l'écoulement. Enfin, l'appareil ne nécessite pas de composant supplémentaire pour réduire la turbulence, puisque c'est la gaine elle-même qui limite la dimension de l'écoulement. Il n'y a pas de surcoût pour obtenir un écoulement laminaire en fonctionnement.

Selon un mode de réalisation, la gaine de ventilation comprend au moins deux moyens de chauffage comprenant chacun un support formant une ailette, les au moins deux ailettes étant agencées l'une en regard de l'autre pour séparer, dans ladite au moins une section, le flux d'air en au moins trois veines d'air avec chacune une épaisseur réduisant la turbulence de l'écoulement du flux d'air dans la gaine de ventilation. Les moyens de chauffage sont agencés en forme d'ailette pour limiter l'épaisseur des veines du flux d'air, ce qui permet de rediriger efficacement le flux d'air pour réduire - supprimer les composantes rotationnelles turbulentes et obtenir un écoulement laminaire

Selon un mode de réalisation, les moyens de chauffage sont chacun un moyen de chauffage avec un fil chauffant enroulé autour du support.

Selon un mode de réalisation, la gaine de ventilation comprend une extrémité amont, et elle présente, à une distance prédéterminée de l'extrémité amont, une réduction progressive de section agencée pour limiter progressivement ladite dimension géométrique du flux d'air canalisé le long d'une portion de la gaine de ventilation. La réduction progressive selon cette mise en oeuvre permet de redonner de la vitesse au flux d'air ou de le re-pressuriser pour éviter un décollement de la couche limite et/ou des zones mortes dans la gaine de ventilation. Il est important de noter que la réduction progressive de section selon cette mise en oeuvre est progressive, et non brutale et/ou discontinue, ce qui aurait pour effet de créer des turbulences.

Selon un mode de réalisation, la gaine de ventilation présente un coude, et la réduction progressive de section commence en amont du coude et se termine au coude. Il est important de redonner de la vitesse au flux d'air avant le coude, afin d'éviter de créer des zones mortes et/ou de recirculation.

Selon un mode de réalisation, la réduction progressive de section en amont du coude présente une forme courbe en continuité avec le coude. Cette mise en oeuvre permet d'éviter la formation de turbulence car il n'y a pas d'arête vive, ni de variation brutale de section. Le flux peut rester laminaire.

Selon un mode de réalisation, les supports formant une ailette sont agencés en amont du coude et ils sont agencés avec une orientation prédéfinie par rapport au flux d'air pour orienter le flux d'air en direction du coude. Le changement de direction du flux d'air au coude est amorcé par l'orientation des supports.

Selon un mode de réalisation, chaque support orienté présente une face baignée par le flux d'air et une face opposée à la face baignée, et au moins un des supports formant ailette est partiellement ajouré pour créer un flux d'air au niveau du fil agencé sur la face opposée du support. Le chauffage est amélioré, par les ajourages : la face opposée (face "sous le vent") est baignée par le flux d'air, ce qui évite toute surchauffe du fil chauffant.

Selon un mode de réalisation, au moins un des supports des moyens de chauffage est partiellement agencé en regard de la réduction progressive de section. La division en trois veines est combinée avec la réduction progressive de section, pour optimiser l'écoulement dans les zones où il serait turbulent.

Selon un mode de réalisation, la gaine de ventilation présente une variation continue de section en aval de la réduction progressive de section. La section de la gaine de ventilation ne varie pas de manière brutale ou discontinue, ce qui réduit la turbulence.

Selon un mode de réalisation, la gaine de ventilation présente une section constante en aval de la réduction progressive de section.

Selon un mode de réalisation, l'appareil comprend un couvercle agencé pour fermer un espace de cuisson au dessus de la cuve, et une partie de la gaine de ventilation est agencée dans le couvercle.

Selon un mode de réalisation, l'appareil comprend au moins une pale de brassage agencée pour enduire automatiquement lesdits aliments d'une pellicule de matière grasse par brassage desdits aliments avec de la matière grasse.

Selon un mode de réalisation, l'appareil forme une friteuse à cuisson sèche.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en coupe d'un appareil de cuisson selon l'invention ;
- la figure 2 représente un détail de la gaine de ventilation de l'appareil de la figure 1.

Conformément à l'invention, l'appareil est un appareil domestique c'est-à-dire spécifiquement conçu et dimensionné pour un usage domestique, par exemple dans le cadre familial. A ce titre, l'appareil peut être manipulé à la main par son utilisateur, par exemple pour être déplacé d'un placard à un plan de travail. En d'autres termes, l'appareil présente préférentiellement un caractère portable

L'appareil conforme à l'invention est préférentiellement conçu et dimensionné pour cuire et/ou chauffer des aliments particulaires tels que des morceaux de pommes de terre.

Le concept général de l'appareil selon l'invention autorise une grande polyvalence en matière de modes de cuisson, de sorte que le terme cuire employé ici recouvre différents modes de traitement des aliments, comme par exemple la friture, le rissolage, le rôtissage, ou le brunissage.

Dans une variante préférentielle de réalisation, qui correspond aux exemples illustrés aux figures, l'appareil conforme à l'invention est préférentiellement conçu et dimensionné pour assurer un traitement thermique des aliments destinés à leur conférer des qualités gustatives sensiblement équivalentes ou proches à celles d'aliments frits, et notamment d'aliments frits dans un bain d'huile. Dans cette variante, l'appareil conforme à l'invention constitue donc une friteuse, et plus particulièrement une friteuse à cuisson sèche. Par cuisson sèche, on désigne ici un mode de cuisson d'aliments sans immersion de ces derniers dans un bain d'huile ou de matière grasse, que cette immersion soit partielle et/ou temporaire pendant le cycle de cuisson.

L'expression cuisson sèche désigne au contraire une cuisson dans laquelle les aliments sont certes mouillés par un médium de cuisson (huile par exemple), mais sans pour autant être plongés ou baigner dans ledit médium. En cela, le principe de fonctionnement de la friteuse conforme à l'invention diffère de celui d'une friteuse classique à bain d'huile, puisqu'il permet en particulier de réunir des conditions propres à l'établissement d'une réaction de Maillard suffisante pour conférer aux aliments le caractère doré et craquant propre aux aliments frits sans que lesdits aliments n'aient pour autant été plongés complètement et directement dans un bain d'huile chaude.

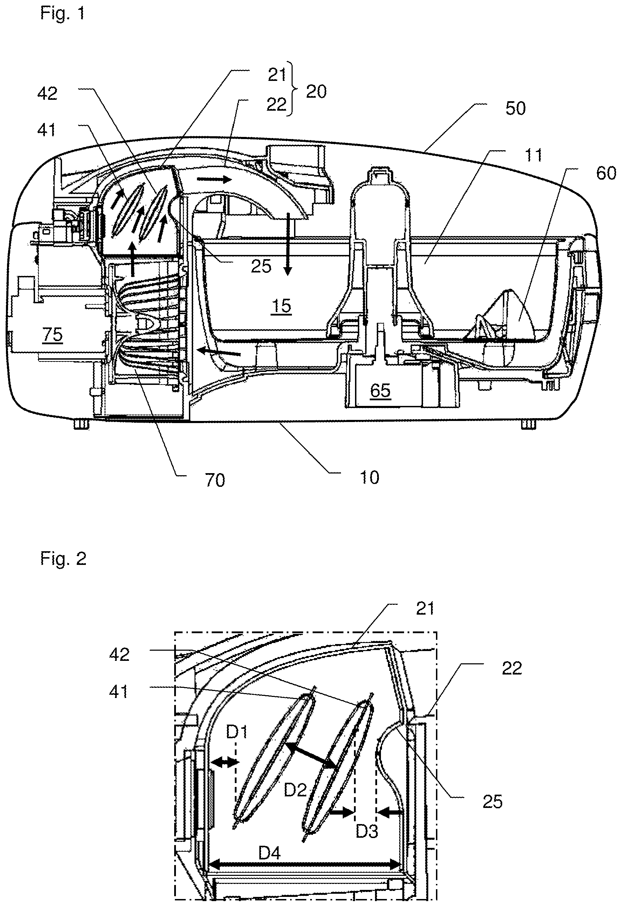

La figure 1 représente une vue en coupe d'un appareil de cuisson comprenant un boîtier 10 avec une cuve 11 de cuisson qui définit un espace de cuisson 15, fermé par un couvercle 50 amovible, pour permettre d'introduire ou de retirer les aliments de la cuve 11 de cuisson.

Une pale de brassage 60, entrainée en rotation par un moteur 65 est agencée dans la cuve 11 pour remuer les aliments à cuire et/ou à réchauffer qui s'y trouvent.

L'appareil de la figure 1 comprend un circuit de chauffage par ventilation avec un moto-ventilateur 75 qui comprend une roue à aubes 70. La roue à aubes 70 aspire de l'air sous la cuve 11, et l'envoie dans une gaine de ventilation 20 qui consiste en un diffuseur 21 formant une partie amont de la gaine de ventilation 20 et un conduit 22 formant une partie aval de la gaine de ventilation 20. Le diffuseur 21 est accolé au moto ventilateur 75 et fixé au boîtier 10 tandis que le conduit 22 est fixé au couvercle 50, qui est amovible. Le conduit 22 est donc mobile par rapport au diffuseur 21.

Le diffuseur 21 contient deux moyens de chauffage 41 et 42 qui chacun comprennent un support et un fil chauffant enroulé autour du support. De plus, le support de chaque moyen de chauffage 41 et 42 est agencé en forme d'ailette, de sorte que le flux d'air créé par la roue à aubes 70 du moto-ventilateur 75 et envoyé dans le diffuseur 21 de la gaine de ventilation 20 est séparé en trois veines d'air ayant chacune une épaisseur bien inférieure à la largeur de la section de la gaine de ventilation 20 à cet endroit.

Il en résulte que les supports des moyens de chauffage 41 et 42 réduisent la turbulence car une des dimensions du flux d'air dans chacune des trois veines d'air est limitée. En effet, le nombre de Reynolds, qui caractérise la nature d'un écoulement (laminaire, transitoire ou turbulent), est une fonction affine de la dimension caractéristique de cet écoulement. En limitant la dimension caractéristique de l'écoulement, on réduit le nombre de Reynolds et on réduit la turbulence de l'écoulement, pour obtenir idéalement un écoulement laminaire.

Le diffuseur 21 de la gaine de ventilation 20 comprend également une réduction progressive de section 25 agencée en regard du support du moyen de chauffage 42. La gaine de ventilation 20 présente par ailleurs un coude pour rediriger le flux d'air vertical en sortie de la roue à aubes 70 vers une direction horizontale dans le conduit 22. Un tel coude dans une canalisation provoque traditionnellement des décollements de la couche limite et/ou des zones mortes dans lesquelles se produit une recirculation du flux d'air. Ces phénomènes dégradent l'efficacité de l'écoulement et/ou génèrent des nuisances sonores. Afin de limiter/supprimer ces décollements de couche limite et/ou zones mortes, la réduction progressive de section 25 commence en amont du coude de la gaine de ventilation 20, afin d'augmenter la vitesse d'écoulement et/ou la pression du flux d'air dans le coude.

Il est important de noter que la réduction progressive de section 25 permet de réduire la section de passage du diffuseur 21 de sorte à ce que son extrémité aval s'adapte parfaitement avec l'extrémité amont du conduit 22 de la gaine de ventilation 20. Le flux d'air passant du diffuseur 21 vers le conduit 22 ne rencontre aucune variation brutale de section, qui pourrait provoquer des zones de turbulence. De plus, la réduction progressive de section 25 a une forme courbe de sorte que la direction de la tangente à la paroi intérieure de la gaine de ventilation 20 varie de manière continue entre le diffuseur 21 et le conduit 22. En d'autres termes, il n'y a pas d'arête saillante à la jonction entre le diffuseur 21 et le conduit 22, toujours pour réduire la turbulence et obtenir un écoulement laminaire dans la gaine de ventilation 20.

Le conduit 22 qui forme la partie aval de la gaine de ventilation 20 présente une section sensiblement constante depuis le diffuseur 21 jusqu'à sa sortie agencée au dessus de la cuve 11. Cette section constante évite de créer des conditions de turbulence pour le flux d'air en gardant la dimension caractéristique de l'écoulement à une valeur correspondant à un nombre de Reynolds du domaine laminaire.

La figure 2 présente en détail la gaine de ventilation et en particulier le diffuseur 21 avec les moyens de chauffage 41 et 42. Généralement, ce type d'appareil de cuisson présente en fonctionnement un flux d'air avec un débit de 150 mètres cube par heure environ, ce qui correspond à une vitesse moyenne du flux d'air de 20 mètres par seconde environ. En sortie du conduit 22 et lors de la cuisson, l'air présente une température d'environ 200°C à 220°C.

Le diffuseur 21 présente en sortie de ventilateur (c'est-à-dire en sa partie amont) une section transversale ayant une largeur D4 comprise entre 45 et 55 millimètres, et une longueur (non représentée) comprise entre 100 et 110 millimètres. La surface totale de cette section de passage est donc d'environ 5250 millimètres carrés, pour une section de longueur de 105 millimètres par une largeur D4 de 50 millimètres. Une distance D2 comprise entre 5 et 20 millimètres, et idéalement entre 12 et 18 millimètres, sépare les supports formant une ailette des moyens de chauffage 41 et 42. Le support formant une ailette du moyen de chauffage 42 est agencé à une distance D3 de la réduction progressive de section 25, comprise entre 5 et 15 millimètres, et idéalement entre 7 et 9 millimètres. Le support formant une ailette du moyen de chauffage 41 est agencé à une distance D1 de la paroi du diffuseur 21, comprise entre 5 et 15 millimètres, et idéalement entre 7 et 9 millimètres.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil de cuisson et/ou de réchauffage d'aliments comprenant :
- un boîtier (10) avec une cuve (11) de cuisson agencée pour recevoir les aliments à cuire et/ou à réchauffer,
- un circuit de chauffage par ventilation comprenant une gaine de ventilation (20) agencée pour canaliser et diriger un flux d'air chaud sur les aliments à cuire et/ou à réchauffer,
**caractérisé en ce que** la gaine de ventilation (20) présente au moins une section transversale en aval de laquelle les turbulences de l'écoulement d'air sont réduites par une limitation d'une dimension géométrique du flux d'air canalisé par ladite section transversale de la gaine de ventilation (20).

2. Appareil selon la revendication 1, **caractérisé en ce que** la gaine de ventilation (20) comprend au moins deux moyens de chauffage (41, 42) comprenant chacun un support formant une ailette, les au moins deux ailettes étant agencées l'une en regard de l'autre pour séparer, dans ladite au moins une section, le flux d'air en au moins trois veines d'air avec chacune une épaisseur réduisant la turbulence de l'écoulement du flux d'air dans la gaine de ventilation (20).

3. Appareil selon la revendication 2, **caractérisé en ce que** les moyens de chauffage (41, 42) sont chacun un moyen de chauffage avec un fil chauffant enroulé autour du support.

4. Appareil selon la revendication 1, **caractérisé en ce que** la gaine de ventilation (20) comprend une extrémité amont, et **en ce qu'**elle présente, à une distance prédéterminée de l'extrémité amont, une réduction progressive de section (25) agencée pour limiter progressivement ladite dimension géométrique du flux d'air canalisé le long d'une portion de la gaine de ventilation (20).

5. Appareil selon la revendication 4, **caractérisé en ce que** la gaine de ventilation (20) présente un coude, et **en ce que** la réduction progressive de section (25) commence en amont du coude et se termine au coude.

6. Appareil selon l'une des revendications 2 ou 3, **caractérisé en ce que** la gaine de ventilation (20) comprend une extrémité amont, et **en ce qu'**elle présente, à une distance prédéterminée de l'extrémité amont, une réduction progressive de section (25) agencée pour limiter progressivement ladite dimension géométrique du flux d'air canalisé le long d'une portion de la gaine de ventilation (20).

7. Appareil selon la revendication 6, **caractérisé en ce que** la gaine de ventilation (20) présente un coude, et **en ce que** la réduction progressive de section (25) commence en amont du coude et se termine au coude.

8. Appareil selon la revendication 7, **caractérisé en ce que** les supports formant une ailette sont agencés en amont du coude et **en ce qu'**ils sont agencés avec une orientation prédéfinie par rapport au flux d'air pour orienter le flux d'air en direction du coude.

9. Appareil selon la revendication 8, **caractérisé en ce que** chaque support orienté présente une face baignée par le flux d'air et une face opposée à la face baignée, et **en ce qu'**au moins un des supports formant ailette est partiellement ajouré pour créer un flux d'air au niveau du fil agencé sur la face opposée du support.

10. Appareil selon l'une des revendications 6 à 8, **caractérisé en ce qu'**au moins un des supports des moyens de chauffage (41, 42) est partiellement agencé en regard de la réduction progressive de section (25).

11. Appareil selon l'une des revendications 4 à 10, **caractérisé en ce que** la gaine de ventilation (20) présente une variation continue de section en aval de la réduction progressive de section (25).

12. Appareil selon l'une des revendications 4 à 10, **caractérisé en ce que** la gaine de ventilation (20) présente une section constante en aval de la réduction progressive de section (25).

13. Appareil selon l'une des revendications 1 à 12, **caractérisé en ce qu'**il comprend un couvercle (50) agencé pour fermer un espace de cuisson (15) au dessus de la cuve (11), et **en ce qu'**une partie de la gaine de ventilation (20) est agencée dans le couvercle (50).

14. Appareil selon l'une des revendications 1 à 13, **caractérisé en ce qu'**il comprend au moins une pale de brassage (60) agencée pour enduire automatiquement lesdits aliments d'une pellicule de matière grasse par brassage desdits aliments avec de la matière grasse.

15. Appareil selon l'une des revendications 1 à 14, **caractérisé en ce qu'**il forme une friteuse à cuisson sèche

## Patentansprüche

1. Gerät zum Garen und / oder Erwärmen von Nahrungsmitteln, umfassend:
- ein Gehäuse (10) mit einem Behälter (11) zum Garen, der angeordnet ist, um zu garende und / oder zu erwärmende Nahrungsmitteln aufzunehmen,
- einen Lüftungsheizkreislauf, der einen Lüftungskanal (20) umfasst, der angeordnet ist, um einen Heißluftstrom über die zu garenden und / oder zu erwärmende Nahrungsmitteln zu kanalisieren und zu lenken,
**dadurch gekennzeichnet, dass** der Lüftungskanal (20) mindestens einen transversalen Querschnitt aufweist, stromabwärts von dem die Turbulenzen der Luftströmung durch eine Begrenzung der geometrischen Dimension des kanalisierten Luftstroms durch den transversalen Querschnitt des Lüftungskanals (20) verringert werden.

2. Gerät nach Anspruch 1, **dadurch gekennzeichnet, dass** der Belüftungskanal (20) mindestens zwei Heizmittel (41, 42) umfasst, die jeweils einen Träger umfassen, der eine Rippe bildet, wobei die mindestens zwei Rippen einander zugewandt angeordnet sind, um in dem mindestens einem Querschnitt den Luftstrom in mindestens drei Luftadern mit jeweils einer Dicke zu trennen, die die Turbulenz der Strömung des Luftstroms in dem Lüftungskanal (20) verringert.

3. Gerät nach Anspruch 2, **dadurch gekennzeichnet, dass** die Heizmittel (41, 42) jeweils ein Heizmittel mit einem um den Träger gewickelten Heizdraht sind.

4. Gerät nach Anspruch 1, **dadurch gekennzeichnet, dass** der Belüftungskanal (20) ein stromaufwärts gelegenes Ende umfasst, und dass er in einem vorbestimmten Abstand von dem stromaufwärts gelegenen Ende eine fortschreitende Verringerung des Querschnitts (25) aufweist, die angeordnet ist, um fortschreitend die geometrische Abmessung des kanalisierten Luftstroms entlang eines Abschnitts des Belüftungskanals (20) zu begrenzen.

5. Gerät nach Anspruch 4, **dadurch gekennzeichnet, dass** der Belüftungskanal (20) eine Biegung aufweist, und dass die fortschreitende Verringerung des Querschnitts (25) stromaufwärts von der Biegung beginnt und an der Biegung endet.

6. Gerät nach einem der Ansprüche 2 oder 3, **dadurch gekennzeichnet, dass** der Belüftungskanal (20) ein stromaufwärts gelegenes Ende aufweist, und dass er in einem vorbestimmten Abstand von dem stromaufwärts gelegenen Ende eine fortschreitende Verringerung des Querschnitts (25) aufweist, die angeordnet ist, um fortschreitend die geometrische Abmessung des kanalisierten Luftstroms entlang eines Abschnitts des Belüftungskanals (20) zu begrenzen.

7. Gerät nach Anspruch 6, **dadurch gekennzeichnet, dass** der Belüftungskanal (20) eine Biegung aufweist, und dass die fortschreitende Verringerung des Querschnitts (25) stromaufwärts von der Biegung beginnt und an der Biegung endet.

8. Gerät nach Anspruch 7, **dadurch gekennzeichnet, dass** die Träger, die eine Rippe bilden, stromaufwärts von der Biegung angeordnet sind, und dass sie mit einer vorbestimmten Ausrichtung in Bezug auf die Luftströmung angeordnet sind, um die Luftströmung in Richtung der Biegung zu richten.

9. Gerät nach Anspruch 8, **dadurch gekennzeichnet, dass** jeder orientierte Träger eine durch die Luftströmung umspülte Fläche und eine der umspülten Fläche gegenüberliegende Fläche aufweist, und dass mindestens einer der Träger , der eine Rippe bildet, teilweise perforiert ist, um eine Luftströmung bei dem auf der gegenüberliegenden Seite des Trägers angeordneten Draht zu erzeugen.

10. Gerät nach einem der Ansprüche 6 bis 8, **dadurch gekennzeichnet, dass** mindestens einer der Träger der Heizmittel (41, 42) teilweise gegenüber der fortschreitenden Verringerung des Querschnitts (25) angeordnet ist.

11. Gerät nach einem der Ansprüche 4 bis 10, **dadurch gekennzeichnet, dass** der Belüftungskanal (20) eine kontinuierliche Veränderung des Querschnitts stromabwärts von der fortschreitenden Verringerung des Querschnitts (25) aufweist.

12. Gerät nach einem der Ansprüche 4 bis 10, **dadurch gekennzeichnet, dass** der Belüftungskanal (20) einen konstanten Querschnitt stromabwärts von der fortschreitenden Verringerung des Querschnitts (25) aufweist.

13. Gerät nach einem der Ansprüche 1 bis 12, **dadurch gekennzeichnet, dass** es einen Deckel (50) umfasst, der angeordnet ist, um einen Garraum (15) oberhalb des Behälters (11) zu verschließen, und dass ein Teil des Belüftungskanals (20) in dem Deckel (50) angeordnet ist.

14. Gerät nach einem der Ansprüche 1 bis 13, **dadurch gekennzeichnet, dass** es mindestens ein Rührblatt (60) umfasst, das angeordnet ist, das Nahrungsmittel automatisch mit einem Fettfilm durch Rühren der Nahrungsmittel mit Fett einzureiben.

15. Gerät nach einem der Ansprüche 1 bis 14, **dadurch gekennzeichnet, dass** es eine Friteuse zum Trockengaren bildet.

## Claims

1. Appliance for cooking and/or reheating food, comprising:
- a housing (10) with a cooking vessel (11) arranged to receive the food to be cooked and/or reheated,
- a circuit for heating by air flow, comprising an air duct (20) arranged to channel and direct a stream of hot air onto the food to be cooked and/or reheated,
**characterised in that** the air duct (20) has at least one cross-section downstream of which the turbulence from the air flow is reduced by limiting one geometric dimension of the stream of air channelled by said cross-section of the air duct (20).

2. Appliance according to claim 1, **characterised in that** the air duct (20) comprises at least two heating means (41, 42) each comprising a support forming a fin, the at least two fins being arranged facing one another to separate, in said at least one cross-section, the air stream into at least three veins of air, each with a thickness reducing the turbulence of the flow of the air stream inside the air duct (20).

3. Appliance according to claim 2, **characterised in that** the heating means (41, 42) are each a heating means with a heating element coiled around the support.

4. Appliance according to claim 1, **characterised in that** the air duct (20) comprises one upstream end, **in that** it has, at a predetermined distance from the upstream end, a gradually reduced cross-section (25) arranged to progressively limit said geometric dimension of the air stream channelled along one portion of the air duct (20).

5. Appliance according to claim 4, **characterised in that** the air duct (20) has a bend, and **in that** the gradually reduced cross-section (25) begins upstream of the bend and ends at the bend.

6. Appliance according to one of claims 2 or 3, **characterised in that** the air duct (20) comprises one upstream end, and **in that** it has, at a predetermined distance from the upstream end, a gradually reduced cross-section (25) arranged to progressively limit said geometric dimension of the air stream channelled along one portion of the air duct (20).

7. Appliance according to claim 6, **characterised in that** the air duct (20) has a bend, and **in that** the gradual reduction of the cross-section (25) begins upstream of the bend and ends at the bend.

8. Appliance according to claim 7, **characterised in that** the supports forming one fin are arranged upstream of the bend and **in that** they are arranged with a predefined orientation with respect to the flow of air, to direct the air stream in the direction of the bend.

9. Appliance according to claim 8, **characterised in that** each oriented support has one surface that is bathed in the air stream and one surface opposite the bathed surface, and **in that** at least one of the supports forming a fin is partially slotted to create an air stream at the element arranged on the opposite surface of the support.

10. Appliance according to one of claims 6 to 8, **characterised in that** at least one of the supports of the heating means (41, 42) is partially arranged facing the gradually reduced cross-section (25).

11. Appliance according to one of claims 4 to 10, **characterised in that** the air duct (20) has a continuous change in cross-section downstream of the gradually reduced cross-section (25).

12. Appliance according to one of claims 4 to 10, **characterised in that** the air duct (20) has a constant cross-section downstream of the gradually reduced cross-section (25).

13. Appliance according to one of claims 1 to 12, **characterised in that** it comprises a lid (50) arranged to close a cooking space (15) at a top of the cooking vessel (11), and **in that** one portion of the air duct (20) is arranged in the lid (50).

14. Appliance according to one of claims 1 to 13, **characterised in that** it comprises at least one mixing paddle (60) arranged to automatically coat said food with a film of fat by mixing said food with the fat.

15. Appliance according to one of claims 1 to 14, **characterised in that** it forms a dry-cooking fryer.
